# EUROPÄISCHE PATENTANMELDUNG

(11) **EP 4 552 467 A1**
(43) Veröffentlichungstag der Anmeldung: **14.05.2025**
(21) Anmeldenummer: 24210476.8
(22) Anmeldetag: 04.11.2024
(51) Int. Cl.: A01D 41/12

(54) **LANDWIRTSCHAFTLICHE ARBEITSMASCHINE**

(30) Priorität: 10.11.2023 DE 102023131365
(71) Anmelder: Lemken GmbH & Co KG, 46519 Alpen (DE)
(72) Erfinder: Nienhaus, Michael, 46399 Bocholt (DE); Düpmann, Jörg, 46499 Hamminkeln (DE); Lensing, Simon, 47533 Kleve (DE)

(57) **Zusammenfassung**

Die vorliegende Erfindung betrifft eine landwirtschaftliche Arbeitsmaschine (1), vorzugsweise landwirtschaftliches Arbeitsgerät (1), mit einer Hauptsteuerungseinheit (10), welche ausgebildet und eingerichtet ist, die Arbeitsmaschine (1) zu betreiben, wobei die Hauptsteuerungseinheit (10) ausgebildet und eingerichtet ist, im Betrieb die folgenden Computerprogramme zu verarbeiten:
• eine Maschinen-Software (10a) zum Betreiben der Arbeitsmaschine (1) und
• eine Service-Software (10b) zum Zugreifen auf Maschinen-Informationen der Maschinen-Software (10a) und
• einen Ringspeicher (10c) zum kontinuierlichen Speichern von aktuellen Maschinen-Informationen der Maschinen-Software (10a) und/oder
• einen Ereignisspeicher (10d) zum Speichern von ereignisrelevanten Maschinen-Informationen der Maschinen-Software (10a).

## Beschreibung

Die vorliegende Erfindung betrifft eine landwirtschaftliche Arbeitsmaschine, vorzugsweise ein landwirtschaftliches Arbeitsgerät.

Auf verschiedenen technischen Gebieten lässt sich der Mensch bei der Verrichtung von Arbeit unterstützen oder sich Arbeit abnehmen, was insbesondere für körperliche schwere Arbeiten der Fall ist.

Für derartige Arbeiten in der Landwirtschaft sind Landwirtschaftliche Arbeitsmaschinen bekannt, wobei zwischen selbstfahrenden und nicht selbstfahrenden Arbeitsmaschinen unterschieden werden kann. Beispiele für selbstfahrende Arbeitsmaschinen sind Erntemaschinen wie Mähdrescher oder Feldhäcksler oder Hoflader. Nicht selbstfahrende Arbeitsmaschinen können in Form eines landwirtschaftlichen Arbeitsgerätes ausgebildet, welches und an einem Zugfahrzeug, beispielsweise an einem Heckkraftheber, angebaut oder angehängt werden kann. Ein Arbeitsgerät kann beispielsweise ein Pflug, eine Drillmaschine oder eine Sämaschine Sein. Ob ein Arbeitsgerät an einem Zugfahrzeug angebaut oder angehängt wird, kann von der Größe des jeweiligen Arbeitsgerätes abhängen.

Wie auf vielen anderen technischen Gebieten werden auch landwirtschaftliche Arbeitsmaschinen heutzutage mit immer mehr Elektronik, Sensorik und/oder Aktorik ausgestattet, um dem Benutzer mehr Funktionen zu bieten sowie um den Benutzer immer besser bei der Durchführung seiner Tätigkeit zu unterstützten.

Aktuell werden an landwirtschaftlichen Arbeitsmaschinen diverse Daten und Informationen generiert. Diese Daten können durch Sensoren generiert werden, wie z.B. als Tankfüllstände, und/oder durch Aktoren verursacht werden, wie z.B. aufgrund der Stromaufnahme. Ferner können diese Daten durch den Anwender eingestellt werden, wie z.B. die Fahrgeschwindigkeit der Arbeitsmaschine. Neben diesen Beispielen sind noch weitere Verursacher von Daten und Informationen an Arbeitsmaschinen denkbar.

Bekannt ist dabei bisher, dass diese Daten und Informationen nach ihrer Generierung durch ein oder mehrere Steuergeräte (engl. ECU = electronic control unit) direkt, d.h. zur Laufzeit bzw. unmittelbar während des Betriebs, analysiert werden, wobei die Steuergeräte daraufhin ggfs. Aktionen direkt durchführen. Steuergeräte können auch als Steuereinheiten bezeichnet werden.

Sollten Daten oder Informationen wie z.B. Sensordaten auf einen anormalen Zustand einer Komponente hinweisen, kann dieses als "Ereignis" angesehen werden, welches eine besondere Reaktion der Steuereinheit erfordert.

Nachteilig ist bei den Steuergeräten bzw. Steuereinheiten von Arbeitsmaschinen bisher, dass derartige Daten und Informationen anschließend, d.h. nach ihrer Erfassung und Verarbeitung bzw. Analyse, nicht länger zur Verfügung stehen, da sie bisher flüchtig sind.

Eine Aufgabe der vorliegenden Erfindung ist es, eine Arbeitsmaschine der eingangs beschriebenen Art bereit zu stellen, so dass die Möglichkeiten der Datenauswertung verbessert werden können. Dies soll insbesondere für "Ereignisse" gelten. In jedem Fall soll dies möglichst einfach, kostengünstig, bauraumsparend, energiesparend, flexibel einsatzbar und/oder intuitiv nutzbar erfolgen können. Zumindest soll eine Alternative zu den bekannten Möglichkeiten zur Verfügung gestellt werden.

Die Aufgabe wird erfindungsgemäß durch eine landwirtschaftliche Arbeitsmaschine, durch ein Verfahren sowie durch ein computerlesbares Medium mit den Merkmalen der unabhängigen Patentansprüche gelöst. Vorteilhafte Weiterbildungen sind in den Unteransprüchen beschrieben.

Somit betrifft die vorliegende Erfindung eine landwirtschaftliche Arbeitsmaschine der eingangs beschriebenen Art, vorzugsweise als landwirtschaftliches Arbeitsgerät, mit einer Hauptsteuerungseinheit, welche auch als ECU bezeichnet werden kann und welche ausgebildet und eingerichtet ist, die landwirtschaftliche Arbeitsmaschine zu betreiben, d.h. ihre bestimmungsgemäße Funktion ausüben bzw. ausführen zu lassen.

Die Hauptsteuerungseinheit ist dabei ausgebildet und eingerichtet, im Betrieb die folgenden Computerprogramme zu verarbeiten:
- eine Maschinen-Software zum Betreiben der Arbeitsmaschine und
- eine Service-Software zum Zugreifen auf Maschinen-Informationen der Maschinen-Software und
- einen Ringspeicher zum kontinuierlichen Speichern von aktuellen Maschinen-Informationen der Maschinen-Software und/oder
- einen Ereignisspeicher zum Speichern von ereignisrelevanten Maschinen-Informationen der Maschinen-Software.

Die Hauptsteuerungseinheit der erfindungsgemäßen Arbeitsmaschine weist stets die o.g. Maschinen-Software als eigentliche bzw. hauptsächliche Betriebssoftware auf, welche um die Service-Software ergänzt wird, um zusätzliche Funktionen zur Verfügung zu stellen, wie nachfolgend näher beschrieben werden wird. Beide Software-Komponenten können in einen gemeinsamen nicht-flüchtigen Speicher und/oder in separaten nicht-flüchtigen Speichern der Hauptsteuerungseinheit, insbesondere dessen physikalischer Speicherkomponente, geladen sein. Der Speicher kann die geladenen Inhalte vorzugsweise persistent, d.h. bewahrend bzw. dauerhaft, speichern. Die Software-Komponenten können auf einem gemeinsamen, insbesondere mehrkernigen, Prozessor oder auf separaten Prozessoren betrieben werden.

Dies gilt ebenso für die Software-Komponenten eines Ringspeichers in Form einer Ringspeicher-Software und/oder eines Ereignisspeichers in Form einer Ereignisspeicher-Software, welche einzeln oder auch beide gemeinsam vorhanden sein, geladen und betrieben werden können. Der Zugriff auf den Ringspeicher und/oder Ereignisspeicher bzw. dessen Steuerung bzw. dessen Betrieb erfolgt vorzugsweise seitens der Service-Software.

Der Ringspeicher stellt einen Ringpuffer zur kontinuierlichen Speicherung von aktuellen Daten dar, wobei ältere Inhalte stets von aktuelleren Inhalten überschrieben werden können. Insbesondere können die ältesten Daten im Ringspeicher gelöscht werden, alle weiteren Daten "wandern" im Ringspeicher einen Platz weiter und die neuesten Daten werden auf den ersten Platz gespeichert. Alternativ kann der Ringspeicher auch mehrere Datensätze mit unterschiedlichem Zeitrang speichern. In diesem Fall können die ältesten Daten direkt von den aktuellen Daten überschrieben werden, so dass ein Verschieben der übrigen Daten entfallen kann.

Der Ereignisspeicher bzw. die Ereignisspeicher-Software stellt einen Datenspeicher dar, in dem verschiedene Ereignisse samt definierter hierzu gehöriger weiterer Informationen gespeichert werden können, wozu vorzugsweise auch zeitlich vorangehende Daten gehören, welche vorzugsweise dem Ringspeicher entstammen können. Entsprechend kann zu einem Ereignis ein Ereignisdatensatz gehören, welcher Informationen zum Ereignis selbst wie beispielsweise zu einem Fehler, vorzugsweise mit einer Fehlerbeschreibung und/oder einem Fehlercode, aufweist sowie zusätzlich Maschinen-Informationen, welche mit dem Ereignis im Zusammenhang gestehen können oder auch weitere bzw. möglichst alle verfügbaren Maschinen-Informationen, um auch Maschinen-Informationen bei der Auswertung des Ergebnisses berücksichtigen zu können, welche üblicherweise keinen Zusammenhang mit dem Ereignis aufweisen. Diese Maschinen-Informationen können stets gleich, d.h. ereignisunabhängig, oder pro Ereignis definiert, d.h. ereignisabhängig, sein.

Um dabei auch zeitlich vorangehenden Maschinen-Informationen berücksichtigen zu können, können die im Zusammenhang mit einem Ereignis gespeicherten Informationen insbesondere im Falle des Ereignisses aus dem Ringspeicher geladen und im Zusammenhang mit dem Ereignis im Ereignisspeicher abgelegt werden. Somit kann der Ringspeicher ein gewisses Maß der Vergangenheit vor einem Ereignis speichern und hierdurch bevorraten, falls im Rahmen des Ereignisses diese vergangenen Maschinen-Informationen aus dem Ringspeicher ausgelesen und zusammen mit dem Ereignis im Ereignisspeicher "dauerhaft", d.h. bis zu einer expliziten Löschung nach Entnahme und/oder Auswertung der Ereignisdaten dort verbleiben. Dies kann die zur Auswertung des Ereignisses zur Verfügung stehenden Informationen deutlich erweitern bzw. verbessern.

In jedem Fall kann die Maschinen-Software im Rahmen des Betreibens der landwirtschaftlichen Arbeitsmaschine und deren Sensoren sowie Aktoren Maschinen-Informationen erfassen, verarbeiten und/oder erzeugen, auf welche seitens der Service-Software zugegriffen werden kann, ohne diese Maschinen-Informationen zu verändern. Seitens der Service-Software kann dann auf den Ringspeicher und/oder auf den Ereignisspeicher zugegriffen werden, um diese Informationen kontinuierlich bzw. ereignisabhängig zu speichern.

Hierdurch können diese Maschinen-Informationen bzw. Daten als Datensätze bzw. Datenpakete über den Zeitpunkt der Erfassung oder Erzeugung hinaus zur Verfügung gestellt werden, um ausgelesen bzw. übertragen und dann ausgewertet bzw. analysiert zu werden. Diese Maschinen-Informationen können intern seitens der Maschinen-Software und/oder der Service-Software verwendet und/oder an interne andere Komponenten übertragen werden. Zusätzlich oder alternativ kann eine Datenübertragung an externe Geräte erfolgen, so dass diese Informationen dort gespeichert, ausgewertet und/oder angezeigt werden können. Hierdurch können die Möglichkeiten der Datenauswertung verbessert werden.

Dies ist besonders vorteilhaft für Daten und Informationen im Zusammenhang mit einem "Ereignis" wie z.B. einem Fehlerfall, welche ansonsten aufgrund der Flüchtigkeit der Daten und Informationen nicht mehr dazu genutzt werden könnten, um Rückschlüsse auf die zugrundeliegende Ursache des Ereignisses zu ziehen.

Ein weiterer Vorteil ist, dass nunmehr derartige Daten und Informationen auch extern zur Verfügung stehen können, um dort und insbesondere später, d.h. zeitlich verzögert, analysiert werden zu können, wodurch auch eine chronologische Darstellung der Ereignisse ermöglicht werden kann.

Gemäß einem Aspekt der Erfindung ist die Service-Software ausgebildet,
- aktuelle Maschinen-Informationen aus der Maschinen-Software auszulesen,
- die ausgelesenen aktuellen Maschinen-Informationen der Maschinen-Software im Ringspeicher zu speichern und
- den Ringspeicher zu aktualisieren.

Dies kann eine konkrete Möglichkeit der Umsetzung zuvor beschriebener Eigenschaften der Service-Software darstellen. Das Aktualisieren von Informationen bzw. Daten als Datenpakete kann durch Verschieben und/oder durch Überschreiben von vorangehenden Datenpaketen erfolgen, wie zuvor beschrieben. Der Vorgang des Aktualisierens kann kontinuierlich, zyklisch und/oder ereignisgesteuert, beispielsweise bei Erreichen eines vorbestimmten Grenzwertes eines Sensors erfolgen.

Gemäß einem weiteren Aspekt der Erfindung ist die Service-Software ferner ausgebildet, die aktuellen Maschinen-Informationen aus der Maschinen-Software lediglich dann auszulesen, falls eine abgelaufene Zykluszeit erkannt wird. Die Zykluszeit beschreibt die Regelmäßigkeit, mit welcher der Ringspeicher aktualisiert wird bzw. mit welcher die Datenpakete im Ringspeicher geschoben werden und das aktuelle Paket neu hinzugefügt wird. Vorzugsweise kann die Zykluszeit 10 Sekunden betragen, was jedoch abhängig vom verfügbaren Speicherplatz sein kann.

Gemäß einem weiteren Aspekt der Erfindung ist die Service-Software ferner ausgebildet,
- eine externe Abfrage des Ringspeichers zu überwachen,
- im Falle einer externen Abfrage des Ringspeichers die gespeicherten Maschinen-Informationen der Maschinen-Software aus dem Ringspeicher auszulesen und
- die ausgelesenen Maschinen-Informationen des Ringspeichers an einen externen Speicher zu senden.

Dies kann eine konkrete Möglichkeit darstellen, die im Ringspeicher gespeicherten Informationen bei Bedarf bzw. auf Anfrage nach außerhalb der Arbeitsmaschine auszugeben. Die externe Anfrage kann als Information eines externen Geräts übertragen und von der Service-Software verarbeitet bzw. erwidert werden. Eine derartige externe Anfrage kann beispielsweise von einer Person, welche die landwirtschaftliche Arbeitsmaschine bedient oder überwacht mittels eines mobilen Endgeräts erstellt und an die landwirtschaftliche Arbeitsmaschine gesendet werden.

Das Senden kann dabei vorzugsweise drahtlos erfolgen. Der externe Speicher kann insbesondere eine Cloud oder dergleichen sein. So können die gespeicherten Informationen nach außerhalb zur Verfügung gestellt werden, um dort verarbeitet, insbesondere ausgewertet, gespeichert und/oder angezeigt zu werden.

Gemäß einem weiteren Aspekt der Erfindung ist die Service-Software ferner ausgebildet,
- den Betrieb der Arbeitsmaschine auf Ereignisse zu überwachen,
- im Falle eines Ereignisses die ereignisrelevanten Maschinen-Informationen der Maschinen-Software auszulesen und
- die ereignisrelevanten Maschinen-Informationen der Maschinen-Software im Ereignisspeicher zu speichern.

Dies kann eine konkrete Möglichkeit der Umsetzung zuvor beschriebener Eigenschaften der Service-Software darstellen. Die Daten im Ereignisspeicher können dabei chronologisch gespeichert werden, um gegenseitige Verbindungen zwischen Ereignissen erkennen zu können.

Gemäß einem weiteren Aspekt der Erfindung ist die Service-Software ferner ausgebildet,
- eine externe Abfrage des Ereignisspeichers zu überwachen,
- im Falle einer externen Abfrage die ereignisrelevanten Maschinen-Informationen der Maschinen-Software aus dem Ereignisspeicher auszulesen und
- die ausgelesenen Maschinen-Informationen des Ereignisspeichers an einen externen Speicher zu senden.

Hierdurch können entsprechende Eigenschaften und Vorteile, wie zuvor hinsichtlich des Ringspeichers bereits beschrieben, auch auf den Ereignisspeicher angewendet und dort genutzt werden. Hierdurch können diese Informationen von extern abgefragt werden, wie zuvor beschrieben.

Gemäß einem weiteren Aspekt der Erfindung ist die Service-Software ferner ausgebildet,
- eine Anzeigeeinheit zu überwachen,
- im Falle einer Abfrage, die ereignisrelevanten Maschinen-Informationen aus dem Ereignisspeicher auszulesen und
- die ausgelesenen Maschinen-Informationen des Ereignisspeichers an die Maschinen-Software zu übertragen.

Hierdurch kann ein Anzeigen der Ereignisinformationen bei Bedarf, d.h. bei Anforderung von extern zur Arbeitsmaschine oder seitens der Arbeitsmaschine, beispielsweise einer Bedieneinheit der Arbeitsmaschine, erfolgen.

Gemäß einem weiteren Aspekt der Erfindung weist die Arbeitsmaschine die Anzeigeeinheit auf, wobei die Maschinen-Software ausgebildet und eingerichtet ist, die ausgelesenen Maschinen-Informationen des Ereignisspeichers an die Anzeigeeinheit zu übertragen, und wobei die Anzeigeeinheit ausgebildet und eingerichtet ist, die ausgelesenen Maschinen-Informationen des Ereignisspeichers anzuzeigen. Dies kann ein Anzeigen von Maschinen-Informationen, Inhalten des Ringspeichers, Inhalten des Ereignisspeichers und dergleichen ermöglichen, falls die Arbeitsmaschine selbst eine Anzeigeeinheit aufweist, was als internes Anzeigen angesehen werden kann. Die Anzeigeeinheit kann insbesondere ein Bestandteil einer kombinierten Anzeige- und Bedieneinheit sein.

Gemäß einem weiteren Aspekt der Erfindung ist die Anzeigeeinheit extern zur Arbeitsmaschine ausgebildet, wobei die Maschinen-Software ausgebildet und eingerichtet ist, die ausgelesenen Maschinen-Informationen des Ereignisspeichers an die Anzeigeeinheit zu übertragen. Hierzu kann ein externes Abfragen erfolgen, wie zuvor beschrieben, um die entsprechenden Informationen der externen Anzeigeeinheit zur Verfügung zu stellen. Somit können die Daten der Maschinen-Informationen nach außerhalb, d.h. nach extern, zur Arbeitsmaschine übertragen werden, um dort empfangen und angezeigt zu werden.

Die Anzeigeeinheit kann insbesondere eine mobile Anzeigeeinheit wie ein Smartphone, ein Tablet oder ein Laptop oder dergleichen in der Umgebung der Arbeitsmaschine sein, wobei die Datenübertragung über Bluetooth, WLAN oder dergleichen erfolgen kann. Auch kann die externe Anzeigeeinheit ein entfernt zur Arbeitsmaschine angeordneter Laptop oder Desktop-Computer sein und die Datenübertragung kann über WLAN und/oder kabelgebunden erfolgen.

Gemäß einem weiteren Aspekt der Erfindung umfassen die aktuellen Maschinen-Informationen und/oder die ereignisrelevanten Maschinen-Informationen Betriebszustände, Sensorwerte, Maschinen-Status, Maschinen-Konfigurationen und/oder Maschineneinstellungen der Arbeitsmaschine und/oder einzelner Komponenten der Arbeitsmaschine. Hierdurch können die entsprechenden Informationen wie zuvor beschrieben genutzt werden.

Gemäß einem weiteren Aspekt der Erfindung umfassen die ereignisrelevanten Maschinen-Informationen zeitlich zurückliegende Informationen des Ringspeichers. Hierdurch können auch zeitlich zurückliegende Informationen zum Ereignis, welche mittels des Ringspeichers ausreichend lang gepuffert werden können, um zeitlich vor das Ereignis schauen zu können, erfasst, gespeichert und zur Auswertung der Ursache des Ereignisses berücksichtigt werden. Dies kann beispielsweise die Ursachenfindung bei einem Fehler erleichtern bzw. verbessern. Dabei kann der zurückliegende Zeitraum vorbestimmt sein, was allgemeingültig erfolgen kann, d.h. für jedes Ereignis Gültigkeiten haben kann, oder auch je nach Ereignis unterschiedlich sein kann. Ggfs. können auch mehrere Ereignisse den gleichen zurückliegenden Zeitraum umfassen und die übrigen Ereignisse individuell sein.

In jedem Fall kann entsprechend auf den Ringspeicher zugegriffen werden, um von dort die zwischengespeicherten bzw. zeitlich gepufferten Maschinen-Informationen in dem jeweiligen zeitlichen Maß bzw. über den jeweiligen zurückliegenden Zeitraum zu entnehmen. Dabei kann die Vergangenheit, auf welche im Ringspeicher zugegriffen werden kann, durch dessen Größe bzw. durch die dort vorhandenen Informationen begrenzt werden.

Gemäß einem weiteren Aspekt der Erfindung umfassen die ereignisrelevanten Maschinen-Informationen eine absolute und/oder relative Zeitinformation. Hierdurch können zusätzliche Informationen eines absoluten und/oder relativen Zeitpunkts des Ereignisses erfasst, gespeichert und zur Auswertung der Ursache des Ereignisses berücksichtigt werden, was beispielsweise die Ursachenfindung bei einem Fehler erleichtern bzw. verbessern kann, indem das Auftreten des Fehlers bzw. bestimmter Informationen, welche mit dem Fehler im Zusammenhang stehen, zeitlich einander und/oder absolut zugeordnet werden können.

Gemäß einem weiteren Aspekt der Erfindung umfasst ein Ereignis einen Fehler und/oder eine Warnung der Arbeitsmaschine und/oder einzelner Komponenten der Arbeitsmaschine. Dies kann konkrete Möglichkeiten der Umsetzung darstellen.

Die vorliegende Erfindung betrifft auch ein Verfahren zum Betreiben einer Arbeitsmaschine mit einer Hauptsteuerungseinheit, welche das Verfahren ausführt, wobei das Verfahren die Schritte der folgenden Computerprogramme umfasst:
- eine Maschinen-Software zum Betreiben der Arbeitsmaschine und
- eine Service-Software zum Zugreifen auf Maschinen-Informationen der Maschinen-Software und
- einen Ringspeicher zum kontinuierlichen Speichern von aktuellen Maschinen-Informationen der Maschinen-Software und/oder
- einen Ereignisspeicher zum Speichern von ereignisrelevanten Maschinen-Informationen der Maschinen-Software.

Somit kann ein Verfahren zur Verfügung gestellt werden, um die zuvor beschrieben Aspekte, Eigenschaften und Vorteile einer erfindungsgemäßen Arbeitsmaschine auch als Verfahren umzusetzen.

Die vorliegende Erfindung betrifft ferner ein computerlesbares (Speicher-)Medium, auf welchem die Service-Software wie zuvor beschrieben gespeichert ist. Hierdurch kann eine erfindungsgemäße Service-Software zur Verfügung gestellt werden.

Mit anderen Worten können im Rahmen dieser Erfindung, insbesondere alle, zur Verfügung stehenden Daten und Informationen einer Arbeitsmaschine kontinuierlich und/oder zyklisch gespeichert werden, um diese persistent, d.h. bewahrend bzw. dauerhaft, zur zukünftigen Analyse zur Verfügung zu stellen. Hierbei können zum einen, vorzugsweise alle, zur Verfügung stehenden Daten und Informationen kontinuierlich und/oder zyklisch gespeichert werden. Zusätzlich oder alternativ können zum anderen bei einem "Ereignis" gezielt Daten und Informationen gespeichert werden, die vorzugsweise im Vorfeld zu diesem Ereignis als dazugehörig definiert wurden. Für eine erste Analyse können die Ereignisse in chorologischer Reihenfolge dargestellt werden. Die Darstellung kann sowohl an einer Anzeigeeinheit an der Arbeitsmaschine als auch zusätzlich oder alternativ mittels Fernzugriff erfolgen.

Hierbei kann ein Ringspeicher vorgesehen werden. Der Ringspeicher kann ein remanentes und/oder persistentes Speichern von Betriebszuständen wie z.B. Sensorwerten, Maschinen-Status, Maschinen-Konfigurationen, Maschineneinstellungen, und dergleichen ermöglichen. Zusätzlich oder alternativ kann eine Speicherung in einem Ringspeicher der Arbeitsmaschine ermöglicht werden. Zusätzlich oder alternativ kann ein Übertragen nach und Speichern in einem externen Speichermedium wie z.B. Cloud, Datenbank, USB-Stick und dergleichen erfolgen. Zusätzlich oder alternativ kann eine persistente Speicherung aller Daten erfolgen, d.h. innerhalb eines externen Speichermediums kann ein Ringspeicher vorhaben sein, so dass diese Informationen dauerhaft dort gespeichert werden können. Dies kann eine historische Speicherung in chronologischer Reihenfolge mit absolutem und/oder relativem Zeitstempel umfassen. Zusätzlich oder alternativ kann ein Auslesen aller oder einzelner Daten des Ringspeichers aus der Bereichslogik der Maschine zur anschließenden Analyse erfolgen. Zusätzlich oder alternativ kann ein Anzeigen aller oder einzelner Daten des Ringspeichers aus der Bereichslogik der Maschine zur Analyse erfolgen.

Weiterhin kann hierzu zusätzlich oder alternativ ein Ereignisüberwachung vorgesehen werden. Hierdurch kann ein remanentes Speichern, d.h. ein auch nach einem Lösen der Daten bzw. nach einem Systemausfall wiederherstellbares Speichern, von Ereignissen wie beispielsweise von Fehlern, Warnungen und dergleichen erfolgen, die während der Maschinenlaufzeit auftreten. Zusätzlich oder alternativ kann ein Speichern aller Betriebszustände wie z.B. Sensorwerten, Maschinen-Status, Maschinen-Konfigurationen, Maschineneinstellungen und dergleichen erfolgen, die zu dem o.g. Ereignis relevant sind. Zusätzlich oder alternativ können alle gespeicherten Betriebszustände des Ereignisses in einem dazugehörigen Datenpaket zusammengefasst und mit einem absoluten und/oder relativen Zeitstempel versehen werden. Zusätzlich oder alternativ kann ein Übertragen nach und Speichern in ein externes Speichermedium wie z.B. eine Cloud, eine Datenbank, ein USB-Stick und dergleichen erfolgen. Zusätzlich oder alternativ kann eine persistente Speicherung der Datenpakete erfolgen, beispielsweise eine historische Speicherung in chronologischer Reihenfolge mit absolutem und/oder relativem Zeitstempel. Zusätzlich oder alternativ kann ein Auslesen aller oder einzelner Daten der Datenpakete aus der Bereichslogik der Maschine zur anschließenden Analyse erfolgen. Zusätzlich oder alternativ kann ein Anzeigen aller oder einzelner Daten der Datenpakete aus der Bereichslogik der Maschine zur Analyse erfolgen.

Zudem kann ein sogenannter Quickcheck erfolgen. Hierzu kann eine chronologische Darstellung bzw. Anzeige der Ereignisse, die an einer Arbeitsmaschine aufgetreten sind, erfolgen. Dieses kann sowohl an einer Anzeigeeinheit an der Arbeitsmaschine als auch mittels Fernzugriff erfolgen.

Weiterhin kann eine Analyse erfolgen. Hierzu kann eine Bereitstellung der remanent gespeicherten Betriebszustände der Bereichslogik für eine extern durchzuführende Analyse erfolgen. Vorzugsweise kann ein Anzeigen der extern durchgeführten Analyse der remanent gespeicherten Betriebszustände in der Bereichslogik und/oder per Webinterface erfolgen.

Zudem kann eine Übertragung der ereignisbezogenen Datenpakete und/oder der Datenpakete des Ringspeichers der Betriebszustände an einen extern Datenspeicher zur remanenten Speicherung über ein Bussystem, beispielsweise CAN-Bus und/oder Ethernet, erfolgen. Auch kann ein Übertragen der ereignisbezogenen Datenpakete und/oder der Datenpakete des Ringspeichers der Betriebszustände an einen extern Datenspeicher zur remanenten Speicherung über eine drahtlose Verbindung erfolgen.

Auf diese Art und Weise können Daten und Informationen einer Arbeitsmaschine für eine spätere und möglicherweise externe Analyse außerhalb der Arbeitsmaschine zur Verfügung stehen. Gerade im Fall eines Ereignisses, beispielsweise bei einem Fehlerfall, können die Daten und Informationen aus der Vergangenheit dazu genutzt werden, um Rückschlüsse auf die zugrundeliegende Ursache des Ereignisses zu ziehen. Es können ereignisbezogene und somit kontextbezogene Datenpakete zur Verfügung gestellt werden. Es kann eine chronologische Darstellung der Ereignisse einer Arbeitsmaschine ermöglicht werden (Quickcheck). Die historischen Verläufe der Maschinen- und Komponentenzustände können über die Lebensdauer der Arbeitsmaschine und dessen Komponenten nachverfolgt werden.

Ein Ausführungsbeispiel und weitere Vorteile der Erfindung werden nachstehend im Zusammenhang mit den folgenden Figuren rein schematisch dargestellt und näher erläutert. Darin zeigt:
- Figur 1: eine schematische Darstellung einer erfindungsgemäßen Arbeitsmaschine; und
- Figur 2: schematische Ablaufdiagramme eines erfindungsgemäßen Verfahrens zum Speichern von Daten;
- Figur 3: ein schematisches Ablaufdiagramm zum Senden von Daten; und
- Figur 4: ein schematisches Ablaufdiagramm zum Anzeigen von Daten.

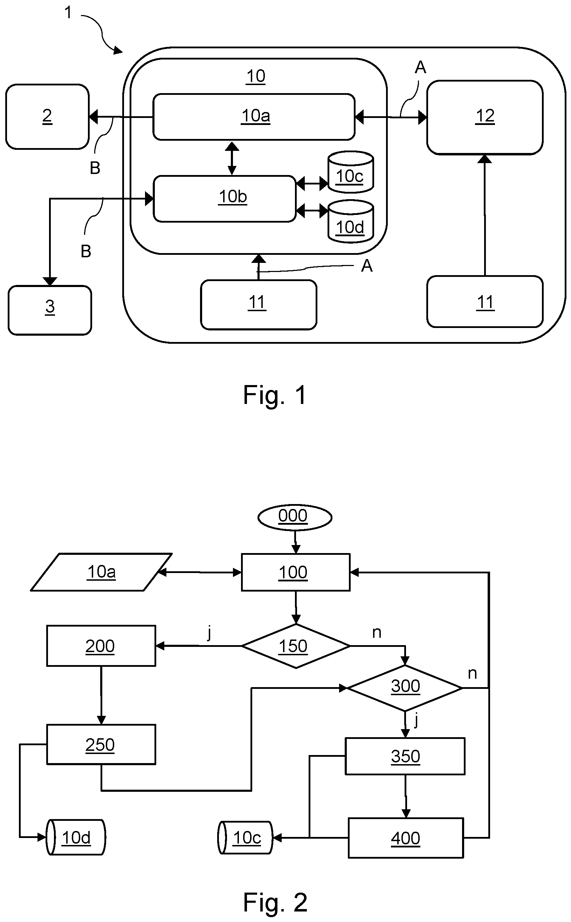

Eine erfindungsgemäße Arbeitsmaschine 1 gemäß der Figur 1 kann beispielsweise eine nichtselbstfahrende landwirtschaftliche Arbeitsmaschine 1 in Form eines angebauten oder angehängten Arbeitsgerätes 1 wie beispielsweise einem Pflug, einer Drillmaschine oder einer Sämaschine sein.

Die Arbeitsmaschine 1 weist eine Hauptsteuerungseinheit 10 auf, auf welcher im Betrieb eine Maschinen-Software 10a, eine Service-Software 10b sowie ein Ringspeicher 10c und ein Ereignisspeicher 10d als Software bzw. als Computerprogramme laufen. Die Arbeitsmaschine 1 weist mehrere Maschinen-Sensoren/-Aktoren 11 auf, welche entweder direkt von der Maschinen-Software 10a oder indirekt von der Maschinen-Software 10a über eine jeweiligen Untersteuerungseinheit 12 betrieben werden. Innerhalb der Arbeitsmaschine 1 werden drahtgebundene Datenverbindungen A in Form von drahtgebundenen Datenbussen A verwendet, was beispielsweise mittels eines CAN-Busses A umgesetzt werden kann.

Es ist eine externe Anzeigeeinheit 2 vorhanden, welche als Anzeige-/Bedieneinheit 2 umgesetzt ist. Hierzu kann beispielsweise ein Smartphone, ein Tablet oder ein Laptop verwendet werden, um die Arbeitsmaschine 1 mobil beweglich während des Betriebs von einer Person begleiten und überwachen bzw. im Falle eines Ereignisses und insbesondere eines Fehlers eine Analyse und Fehlerhebung vor Ort ausführen zu lassen. Hierzu kann eine drahtlose Datenverbindung B in Form eines drahtlosen Datenbusses B verwendet werden, was beispielsweise mit WLAN oder Bluetooth umgesetzt werden kann.

Über eine drahtlose Datenverbindung B, beispielsweise in Form einer Mobilfunk- oder WLAN-Verbindung, kann die Arbeitsmaschine 1 auch mit dem Internet verbunden sein, um Daten auf einem externen Speicher 3 wie beispielsweise in einer Cloud 3 speichern zu können.

Die Hauptsteuerungseinheit 10 ist ausgebildet und eingerichtet, im Betrieb die Computerprogramme der Maschinen-Software 10a, der Service-Software 10b, des Ringspeichers 10c und des Ereignisspeichers 10d zu verarbeiten. Somit kann die Maschinen-Software 10a zum Betreiben der Arbeitsmaschine 1 verwendet werden. Die Service-Software 10b kann zum Zugreifen auf Maschinen-Informationen der Maschinen-Software 10a verwendet werden. Der Ringspeicher 10c kann zum kontinuierlichen oder zyklischen Speichern von aktuellen Maschinen-Informationen der Maschinen-Software 10a verwendet werden. Der Ereignisspeicher 10d kann zum Speichern von ereignisrelevanten Maschinen-Informationen der Maschinen-Software 10a verwendet werden.

Dabei ist die Service-Software 10b ausgebildet, aktuelle Maschinen-Informationen aus der Maschinen-Software 10a auszulesen, die ausgelesenen aktuellen Maschinen-Informationen der Maschinen-Software 10a im Ringspeicher 10c zu speichern und den Ringspeicher 10c zu aktualisieren, was durch das Überschreiben der ältesten Daten durch die aktuellen Daten erfolgen kann. Hierzu werden die ältesten Daten im Ringspeicher gelöscht, alle übrigen Datenpakete werden im Ringspeichern um einen Platz weitergeschoben und die neuesten Daten werden auf den ersten Platz des Ringspeichers gespeichert.

Die Service-Software 10b ist ferner ausgebildet, die aktuellen Maschinen-Informationen aus der Maschinen-Software 10a lediglich dann auszulesen, falls eine abgelaufene Zykluszeit erkannt wird. Die Zykluszeit beschreibt die Regelmäßigkeit, mit der der Ringspeicher aktualisiert wird, bzw. die Pakete im Ringspeicher geschoben werden und das aktuelle Paket neu hinzugefügt wird. Beispielsweise kann die Zykluszeit 10 Sekunden betragen, d.h. es kann alle 10 Sekunden ein Auslesen der aktuellen Maschinen-Informationen aus der Maschinen-Software 10a erfolgen.

Die Service-Software 10b ist ferner ausgebildet, eine externe Abfrage, welche beispielsweise seitens einer Person über ein mobiles Endgerät im Rahmen der Überwachung der Arbeitsmaschine 1 über eine drahtlose Datenverbindung A erfolgen, des Ringspeichers 10c zu überwachen, im Falle einer externen Abfrage des Ringspeichers 10c die aktuellen Maschinen-Informationen der Maschinen-Software 10a aus dem Ringspeicher 10c auszulesen und die ausgelesenen Maschinen-Informationen des Ringspeichers 10c über die drahtlose Datenverbindung A an einen externen Speicher 3 zu senden.

Die Service-Software 10b ist ferner ausgebildet, den Betrieb der Arbeitsmaschine 1 auf Ereignisse wie beispielsweise Fehler bzw. Fehlermeldungen, das Überschreiten und/oder Unterschreiten von vorbestimmten Grenzwerten durch vorbestimmte Parameter der Arbeitsmaschine bzw. dessen Komponenten und dergleichen zu überwachen, im Falle eines Ereignisses die ereignisrelevanten Maschinen-Informationen der Maschinen-Software 10a auszulesen und die ereignisrelevanten Maschinen-Informationen der Maschinen-Software 10a im Ereignisspeicher 10d zu speichern.

Die Service-Software 10b ist ferner ausgebildet, eine externe Abfrage, wie zuvor beschrieben, des Ereignisspeichers 10d zu überwachen, im Falle einer externen Abfrage die ereignisrelevanten Maschinen-Informationen der Maschinen-Software 10a aus dem Ereignisspeicher 10d auszulesen und die ausgelesenen Maschinen-Informationen des Ereignisspeichers 10d an einen externen Speicher 3 zu senden.

Die Service-Software 10b ist ferner ausgebildet, die Anzeigeeinheit 2 zu überwachen, im Falle einer Abfrage die ereignisrelevanten Maschinen-Informationen aus dem Ereignisspeicher 10d auszulesen und die ausgelesenen Maschinen-Informationen des Ereignisspeichers 10d an die Maschinen-Software 10a zu übertragen. Im betrachten Ausführungsbeispiel einer externen Anzeigeeinheit 2 ist die Maschinen-Software 10a ausgebildet und eingerichtet, die ausgelesenen Maschinen-Informationen des Ereignisspeichers 10d an die Anzeigeeinheit 2 zu übertragen, so dass die ausgelesenen Maschinen-Informationen des Ereignisspeichers 10d von der Anzeigeeinheit 2 angezeigt bzw. dargestellt werden können.

Alternativ ist es möglich, dass die Arbeitsmaschine 1 die Anzeigeeinheit aufweist, wobei die Maschinen-Software 10a ausgebildet und eingerichtet ist, die ausgelesenen Maschinen-Informationen des Ereignisspeichers 10d an die Anzeigeeinheit zu übertragen, und wobei die Anzeigeeinheit ausgebildet und eingerichtet ist, die ausgelesenen Maschinen-Informationen des Ereignisspeichers 10d anzuzeigen.

Die aktuellen Maschinen-Informationen und/oder die ereignisrelevanten Maschinen-Informationen umfassen Betriebszustände, Sensorwerte, Maschinen-Status, Maschinen-Konfigurationen und/oder Maschineneinstellungen der Arbeitsmaschine 1 und/oder einzelner Komponenten der Arbeitsmaschine 1 wie z.B. dessen Maschinen-Sensoren/-Aktoren 11. Die ereignisrelevanten Maschinen-Informationen umfassen zumindest teilweise zeitlich zurückliegende Informationen des Ringspeichers 10c. Die ereignisrelevanten Maschinen-Informationen umfassen eine absolute und/oder relative Zeitinformation, beispielsweise eine konkrete Uhrzeit und/oder einen relativen zeitlichen Abstand bzw. eine Zeitdauer relativ zu einem bestimmten Zeitpunkt und dergleichen. Ein Ereignis umfasst einen Fehler und/oder eine Warnung der Arbeitsmaschine 1 und/oder einzelner Komponenten der Arbeitsmaschine 1 wie z.B. dessen Maschinen-Sensoren/-Aktoren 11.

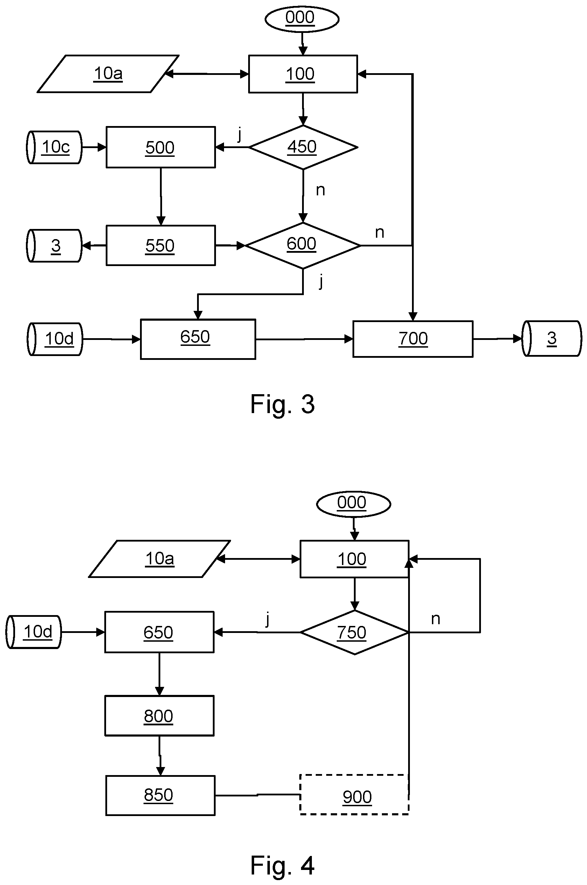

Diese Aspekte der Arbeitsmaschine 1 können auch als Verfahren umgesetzt werden, wie den schematischen Ablaufdiagrammen der Figuren 2 bis 4 zu entnehmen ist. So zeigt Figur 2 ein schematisches Ablaufdiagramm eines erfindungsgemäßen Verfahrens zum Speichern von Daten. Figur 3 zeigt ein schematisches Ablaufdiagramm zum Senden von Daten. Figur 4 zeigt ein schematisches Ablaufdiagramm zum Anzeigen von Daten.

Somit betrifft die vorliegende Erfindung auch ein Verfahren zum Betreiben einer Arbeitsmaschine 1 mit einer Hauptsteuerungseinheit 10, welche das Verfahren ausführt, wobei das Verfahren die Schritte der folgenden Computerprogramme umfasst:
- eine Maschinen-Software 10a zum Betreiben der Arbeitsmaschine 1 und
- eine Service-Software 10b zum Zugreifen auf Maschinen-Informationen der Maschinen-Software 10a und
- einen Ringspeicher 10c zum kontinuierlichen Speichern von aktuellen Maschinen-Informationen der Maschinen-Software 10a und/oder
- einen Ereignisspeicher 10d zum Speichern von ereignisrelevanten Maschinen-Informationen der Maschinen-Software 10a.

Einem Start 000 des Verfahrens (Fig. 2) folgt ein Betreiben 100 der Arbeitsmaschine 1 mittels der Maschinen-Software 10a. Es folgt ein Überwachen 150 des Betriebs der Arbeitsmaschine 1 auf Ereignisse wie beispielsweise eine Fehlermeldung. Im Falle eines Ereignisses erfolgt ein Auslesen 200 der ereignisrelevanten Maschinen-Informationen der Maschinen-Software 10a sowie ein Speichern 250 der ereignisrelevanten Maschinen-Informationen der Maschinen-Software 10a im Ereignisspeicher 10d.

Falls kein Ereignis eintritt, erfolgt ein Überwachen 300 bzw. ein Abfragen der Zykluszeit. Falls die Zykluszeit abgelaufen ist, erfolgt ein Speichern 350 aktueller Maschinen-Informationen der Maschinen-Software 10a im Ringspeicher 10c sowie ein Aktualisieren 400 des Ringspeichers 10c, vgl. Figur 2.

Zum Senden von Daten bei Bedarf erfolgt gemäß der Fig. 3 ein Überwachen 450 der externen Abfrage des Ringspeichers 10c. Falls eine externe Abfrage des Ringspeichers 10c erfolgt, erfolgt ein Auslesen 500 aktueller Maschinen-Informationen der Maschinen-Software 10a aus dem Ringspeicher 10c sowie ein Senden 550 der ausgelesenen Maschinen-Informationen des Ringspeichers 10c an einen externen Speicher 3.

Es erfolgt ein Überwachen 600 der externen Abfrage des Ereignisspeichers 10d. Falls eine externe Abfrage des Ereignisspeichers 10d erfolgt, erfolgt ein Auslesen 650 der ereignisrelevanten Maschinen-Informationen aus dem Ereignisspeicher 10d sowie ein Senden 700 der ausgelesenen Maschinen-Informationen des Ereignisspeichers 10d an einen externen Speicher 3, vgl. Figur 3.

Zum Anzeigen von Daten erfolgt gemäß der Fig. 4 ein Überwachen 750 der externen Anzeigeeinheit 2. Falls eine externe Abfrage des Ereignisspeichers 10d beispielsweise durch eine Anfrage einer Person mittels einer externen Anzeige-/Bedieneinheit 2 erfolgt, erfolgt ein Auslesen 650 der ereignisrelevanten Maschinen-Informationen aus dem Ereignisspeicher 10d, ein Übertragen 800 der ausgelesenen Maschinen-Informationen des Ereignisspeichers 10d an Maschinen-Software 10a, ein Übertragen 850 der ausgelesenen Maschinen-Informationen des Ereignisspeichers 10d an die externe Anzeigeeinheit 2 sowie ein Anzeigen 900 der ausgelesenen Maschinen-Informationen des Ereignisspeichers 10d mittels der Anzeigeeinheit 2.

### BEZUGSZEICHENLISTE (Teil der Beschreibung)

- A: drahtgebundene Datenverbindung; drahtgebundener Datenbus; CAN-Bus
- B: drahtlose Datenverbindung; drahtloser Datenbus; WLAN; Bluetooth

- 1: Arbeitsmaschine; Arbeitsgerät
- 10: Hauptsteuerungseinheit
- 10a: Maschinen-Software
- 10b: Service-Software
- 10c: Ringspeicher
- 10d: Ereignisspeicher
- 11: Maschinen-Sensoren/-Aktoren
- 12: Untersteuerungseinheit

- 2: (externe) Anzeigeeinheit; Anzeige-/Bedieneinheit

- 3: externer Speicher; Cloud

- 000: Start
- 100: Betreiben der Arbeitsmaschine 1 mittels der Maschinen-Software 10a
- 150: Überwachen des Betriebs der Arbeitsmaschine 1 auf Ereignisse
- 200: Auslesen der ereignisrelevanten Maschinen-Informationen der Maschinen-Software 10a
- 250: Speichern der ereignisrelevanten Maschinen-Informationen der Maschinen-Software 10a im Ereignisspeicher 10d
- 300: Überwachen der Zykluszeit
- 350: Speichern aktueller Maschinen-Informationen der Maschinen-Software 10a im Ringspeicher 10c
- 400: Aktualisieren des Ringspeichers 10c
- 450: Überwachen der externen Abfrage des Ringspeichers 10c
- 500: Auslesen aktueller Maschinen-Informationen der Maschinen-Software 10a aus dem Ringspeicher 10c
- 550: Senden der ausgelesenen Maschinen-Informationen des Ringspeichers 10c an einen externen Speicher 3
- 600: Überwachen der externen Abfrage des Ereignisspeichers 10d
- 650: Auslesen der ereignisrelevanten Maschinen-Informationen aus dem Ereignisspeicher 10d
- 700: Senden der ausgelesenen Maschinen-Informationen des Ereignisspeichers 10d an einen externen Speicher 3
- 750: Überwachen der (externen) Anzeigeeinheit 2
- 800: Übertragen der ausgelesenen Maschinen-Informationen des Ereignisspeichers 10d an Maschinen-Software 10a
- 850: Übertragen der ausgelesenen Maschinen-Informationen des Ereignisspeichers 10d an die (externe) Anzeigeeinheit 2
- 900: Anzeigen der ausgelesenen Maschinen-Informationen des Ereignisspeichers 10d mittels der Anzeigeeinheit 2

## Patentansprüche

1. Landwirtschaftliche Arbeitsmaschine (1), vorzugsweise landwirtschaftliches Arbeitsgerät (1), mit einer Hauptsteuerungseinheit (10), welche ausgebildet und eingerichtet ist, die Arbeitsmaschine (1) zu betreiben, wobei die Hauptsteuerungseinheit (10) ausgebildet und eingerichtet ist, im Betrieb die folgenden Computerprogramme zu verarbeiten:
• eine Maschinen-Software (10a) zum Betreiben der Arbeitsmaschine (1) und
• eine Service-Software (10b) zum Zugreifen auf Maschinen-Informationen der Maschinen-Software (10a) und
• einen Ringspeicher (10c) zum kontinuierlichen Speichern von aktuellen Maschinen-Informationen der Maschinen-Software (10a) und/oder
• einen Ereignisspeicher (10d) zum Speichern von ereignisrelevanten Maschinen-Informationen der Maschinen-Software (10a).

2. Arbeitsmaschine (1) nach Anspruch 1, wobei die Service-Software (10b) ausgebildet ist,
• aktuelle Maschinen-Informationen aus der Maschinen-Software (10a) auszulesen,
• die ausgelesenen aktuellen Maschinen-Informationen der Maschinen-Software (10a) im Ringspeicher (10c) zu speichern und
• den Ringspeicher (10c) zu aktualisieren.

3. Arbeitsmaschine (1) nach Anspruch 2, wobei die Service-Software (10b) ferner ausgebildet ist, die aktuellen Maschinen-Informationen aus der Maschinen-Software (10a) lediglich dann auszulesen, falls eine abgelaufene Zykluszeit erkannt wird.

4. Arbeitsmaschine (1) nach Anspruch 2 oder 3, wobei die Service-Software (10b) ferner ausgebildet ist,
• eine externe Abfrage des Ringspeichers (10c) zu überwachen,
• im Falle einer externen Abfrage des Ringspeichers (10c) die gespeicherten Maschinen-Informationen der Maschinen-Software (10a) aus dem Ringspeicher (10c) auszulesen und
• die ausgelesenen Maschinen-Informationen des Ringspeichers (10c) an einen externen Speicher (3) zu senden.

5. Arbeitsmaschine (1) nach einem der vorangehenden Ansprüche, wobei die Service-Software (10b) ferner ausgebildet ist,
• den Betrieb der Arbeitsmaschine (1) auf Ereignisse zu überwachen,
• im Falle eines Ereignisses die ereignisrelevanten Maschinen-Informationen der Maschinen-Software (10a) auszulesen und
• die ereignisrelevanten Maschinen-Informationen der Maschinen-Software (10a) im Ereignisspeicher (10d) zu speichern.

6. Arbeitsmaschine (1) nach Anspruch 5, wobei die Service-Software (10b) ferner ausgebildet ist,
• eine externe Abfrage des Ereignisspeichers (10d) zu überwachen,
• im Falle einer externen Abfrage die ereignisrelevanten Maschinen-Informationen der Maschinen-Software (10a) aus dem Ereignisspeicher (10d) auszulesen und
• die ausgelesenen Maschinen-Informationen des Ereignisspeichers (10d) an einen externen Speicher (3) zu senden.

7. Arbeitsmaschine (1) nach Anspruch 5 oder 6, wobei die Service-Software (10b) ferner ausgebildet ist,
• eine Anzeigeeinheit (2) zu überwachen,
• im Falle einer Abfrage die ereignisrelevanten Maschinen-Informationen aus dem Ereignisspeicher (10d) auszulesen und
• die ausgelesenen Maschinen-Informationen des Ereignisspeichers (10d) an die Maschinen-Software (10a) zu übertragen.

8. Arbeitsmaschine (1) nach Anspruch 7, wobei die Arbeitsmaschine (1) die Anzeigeeinheit aufweist, wobei die Maschinen-Software (10a) ausgebildet und eingerichtet ist, die ausgelesenen Maschinen-Informationen des Ereignisspeichers (10d) an die Anzeigeeinheit zu übertragen, und wobei die Anzeigeeinheit ausgebildet und eingerichtet ist, die ausgelesenen Maschinen-Informationen des Ereignisspeichers (10d) anzuzeigen.

9. Arbeitsmaschine (1) nach Anspruch 7, wobei die Anzeigeeinheit (2) extern zur Arbeitsmaschine (1) ausgebildet ist, wobei die Maschinen-Software (10a) ausgebildet und eingerichtet ist, die ausgelesenen Maschinen-Informationen des Ereignisspeichers (10d) an die Anzeigeeinheit (2) zu übertragen.

10. Arbeitsmaschine (1) nach einem der vorangehenden Ansprüche, wobei die aktuellen Maschinen-Informationen und/oder die ereignisrelevanten Maschinen-Informationen Betriebszustände, Sensorwerte, Maschinen-Status, Maschinen-Konfigurationen und/oder Maschineneinstellungen der Arbeitsmaschine (1) und/oder einzelner Komponenten der Arbeitsmaschine (1) umfassen.

11. Arbeitsmaschine (1) nach einem der vorangehenden Ansprüche, wobei die ereignisrelevanten Maschinen-Informationen zeitlich zurückliegende Informationen des Ringspeichers (10c) umfassen.

12. Arbeitsmaschine (1) nach einem der vorangehenden Ansprüche, wobei die ereignisrelevanten Maschinen-Informationen eine absolute und/oder relative Zeitinformation umfassen.

13. Arbeitsmaschine (1) nach einem der vorangehenden Ansprüche, wobei ein Ereignis einen Fehler und/oder eine Warnung der Arbeitsmaschine (1) und/oder einzelner Komponenten der Arbeitsmaschine (1) umfasst.

14. Verfahren zum Betreiben einer landwirtschaftlichen Arbeitsmaschine (1) mit einer Hauptsteuerungseinheit (10), welche das Verfahren ausführt, wobei das Verfahren die Schritte der folgenden Computerprogramme umfasst:
• eine Maschinen-Software (10a) zum Betreiben der Arbeitsmaschine (1) und
• eine Service-Software (10b) zum Zugreifen auf Maschinen-Informationen der Maschinen-Software (10a) und
• einen Ringspeicher (10c) zum kontinuierlichen Speichern von aktuellen Maschinen-Informationen der Maschinen-Software (10a) und/oder
• einen Ereignisspeicher (10d) zum Speichern von ereignisrelevanten Maschinen-Informationen der Maschinen-Software (10a).

15. Computerlesbares (Speicher-)Medium, auf welchem die Service-Software (10b) nach einem der vorangehenden Ansprüche gespeichert ist.
